Europäisches Patentamt

European Patent Office

Office européen des brevets

(19)

(11) Publication number: **0 142 214**

**A1**

(12)

# EUROPEAN PATENT APPLICATION

(21) Application number: **84303411.7**

(22) Date of filing: **18.05.84**

(51) Int. Cl.⁴: **F 24 H 1/40**

(30) Priority: **18.05.83 GB 8313803**

(43) Date of publication of application:
**22.05.85 Bulletin 85/21**

(84) Designated Contracting States:
**DE FR GB IT NL SE**

(71) Applicant: **BRITISH ALCAN ALUMINIUM LIMITED**
**Chalfont Park**
**Gerrards Cross Buckinghamshire SL9 0QB(GB)**

(72) Inventor: **Simpson, Victor John**
**Tally-Ho Onslow Road Burwood Park**
**Walton-on-Thames Surrey(GB)**

(74) Representative: **Boydell, John Christopher et al,**
**Stevens, Hewlett & Perkins 5 Quality Court Chancery**
**Lane**
**London, WC2A 1HZ(GB)**

(54) **Improvements in heating boilers.**

(57) A heating boiler comprising a water inlet manifold (2), water outlet manifold (1) and a plurality of extruded aluminium finned tubes (3) extending between the manifolds (1 and 2) and communicating therewith in a watertight manner by way of press-fit ferrules (10). Two rows of tubes (3) are arranged within the casing (18) against opposite side walls and enclose a cavity which is split by a platform (21) into a combustion chamber (6) having a burner (11) and an exhaust chamber (23) having a flue (15). Combustion products pass from the combustion chamber into an intermediate zone (7) and thence into a condensation zone (8) where baffle (16) directs the products of combustion onto the fins of the tubes (3). In this latter zone condensation occurring on the fins is collected in tray (24) and may be drained via a port (25).

FIG.1

EP 0 142 214 A1

## "IMPROVEMENTS IN HEATING BOILERS"

This invention relates to heating boilers of the type used for heating water to be passed to space heating radiators and/or hot water cylinders. The boiler of the invention may be oil or gas fired but, for convenience, reference will be made hereinafter only to gas fired types.

The invention is concerned primarily with high thermal efficiency boilers and in particular to boilers operating at efficiences at which the latent heat of the flue gas may be recovered by condensation methods. Such boilers require to employ a heat exchanger having a large surface area in order to absorb the heat from the combustion products at diminished temperature difference. To meet the requirements for optimum thermal efficiency the surface areas presented to the combustion zone and the water way require different characteristics to those which are ideal for high temperature gas to water heat exchange and again differ from those ideally required for low temperature flue gas to water heat exchange in the condensation zone.

It has been practice to satisfy some of these conditions by designing boiler sections as metal castings having an internal waterway and integrally cast fins to provide additional surface area over which the combustion products pass, at the same time giving up a proportion of the heat contained therein to the fins from where it transfers by conduction through the metal to the water. However, the production of hollow water pressure tight castings is a relatively slow and expensive manufacturing process.

The present invention seeks to provide a boiler which overcomes the disadvantages of these known types.

In accordance with the invention there is provided a heating boiler comprising a casing, a water flow collector manifold, a return water collector manifold, a plurality of finned tubes extending within said casing and interconnecting the flow and return manifolds in a water-tight manner, and burner and exhaust assemblies positioned within said casing, the arrangement being such that a flow path for combustion products is defined within the casing from the burner assembly to the exhaust assembly which flow path is such that the combustion products come into intimate contact with said finned tubes.

Preferably, the flow and return manifolds are positioned at the top and bottom of the casing respectively and may, indeed, actually form all or part of the upper and lower covers of the casing. The finned tubes extend through the interior of the casing and, with the boiler positioned for operation, will thus be substantially vertical. The finned tubes may advantageously be arranged parallel with one another in a row or rows and abutting one another in such a way that each such row forms an effective wall which can act as a baffle to direct the flow of combustion products. Such baffles, or rows of abutting tubes, may be arranged in spaced relation to each other or to the inside wall of the casing in order to provide an efficient flow path for combustion products. In a particular embodiment, the rows of tubes are arranged around and spaced from the interior walls of the casing in order to define a central chamber in which the burner assembly is situated, the arrangement being such that combustion products from the burner can flow up one side of each row of tubes, through a gap between the ends of the tubes and the upper cover of the casing, and thence down between the row of tubes and the casing wall before finally passing to the exhaust assembly. In a casing having a rectangular or square horizontal section, the above embodiment may be configured with one baffle, or row of tubes, adjacent each wall - i.e. four rows of tubes in all, defining a rectangular chamber in between which the burner assembly is housed, as aforsaid.   Other, related, configurations are however possible - for example, the presently preferred embodiment uses just two rows of tubes positioned against opposite walls of the casing so that the combustion chamber is defined by the two rows of tubes and by the internal surfaces of those walls of the casing which are not obscured by the tubes.

One of the advantages of this invention is that it enables the fins on the tubes to be arranged in the most advantageous manner, depending upon which part of the flow path of combustion products they are situated in.   Three zones can be identified:-

1.        The combustion zone immediately following the burner in the direction of flow;

2.        The intermediate zone in which high temperature gas to water heat exchange occurs;

3.        The condensation zone in which low temperature gas to water heat exchange occurs.

Each of these zones in the flow path has slightly different heat exchange requirements and the use of finned tubes enables those requirements to be met in a particularly effective manner, as will be described below.

Preferably the fins on each tube extend in the longitudinal direction of the tube, as apposed to individual fins spaced longitudinally and extending radially from the tube centre.   Such an arrangement of fins enables each tube and its fins to be formed together as an extrusion of, for example, aluminium or aluminium alloy.   Such a longitudinal arrangement of fins has the further advantage of providing a self-spacing effect when placed against the inside wall of the casing, in the manner described above, such that combustion products can flow along the plurality of inter-fin passages formed when the tube with its fins is placed in abutting relationship with the casing wall surface. This arrangement simplifies construction and reduces costs, as well as ensuring an intimate flow of combustion products over the fins and hence maximum heat transfer.

It has been mentioned that efficiency can be significantly improved by utilising some of the latent heat in the flue gases. To do this the flow path of combustion gases must incorporate the above-mentioned "condensation" zone in which combustion products which would otherwise be directly exhausted are first passed across a further area of the heat exchanger. In this zone cooling of the combustion products causes condensation of water vapour, and means must be provided for collecting and draining this. In a preferred embodiment of the invention, to be described, the burner assembly is mounted on a platform at an intermediate level in the casing, thus defining, above the platform, a combustion chamber and, below the platform, an exhaust chamber. In this construction, combustion products which would otherwise be directly exhausted are instead able to flow over those parts of the finned tubes which face into the exhaust chamber before passing to the flue. Baffles may be incorporated in the exhaust chamber in order to encourage the combustion products to pass through the fins, thus extracting as much as possible of the heat prior to exhausting the combustion products. Any condensate which collects on the fins as a result of this process will fall to the bottom of the casing and may be removed.

In order that the invention may be better understood, an embodiment thereof will now be described by way of example only and with reference to the accompanying drawings in which:-

Figure 1 is a front sectional elevation of an embodiment of the boiler of the present invention;

Figure 2 is a plan view, partly sectioned along lines II-II of the boiler of Figure 1;

Figure 3 is a side sectional elevation of the boiler of Figure 1;

Figure 4 is a transverse cross-sectional view on an enlarged scale of one of the finned tubes used in the boiler of Figure 1; and

Figure 5 is an enlarged view in (A) section and (B) plan of the ferrule used in the boiler of Figure 1.

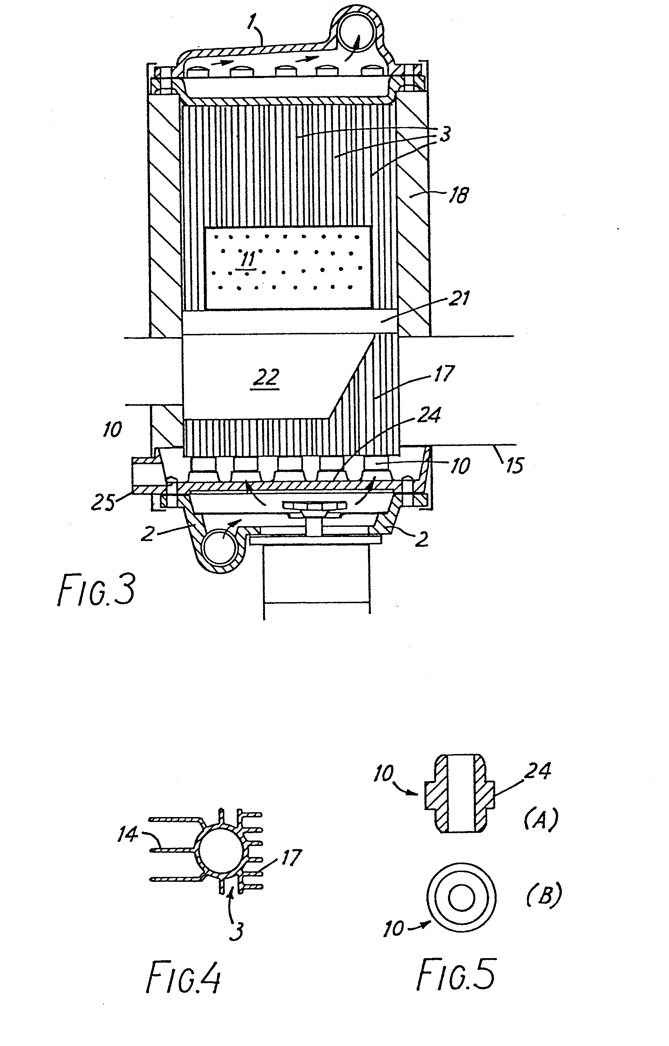

Referring to the drawings, the boiler comprises a casing 18 which is rectangular in plan and has, at its upper end, a water flow header or collector manifold 1 and, at its lower end, a water return header or collector manifold 2, these latter being interconnected by a number of finned water tubes 3 extending within the casing. The water tubes 3 account for the major proportion of heat transfer within the boiler and take the form of hollow tubes which together form the boiler water way. The exterior of each tube is finned as shown in detail in Figure 4, the fins extending longitudinally along the said tube. The walls of the casing 18 are fabricated as a sandwich of thermal insulating material between a pair of thin sheets of metal, for example steel. The finned tubes are made from aluminium alloy and are advantageously extruded to the required shape using a suitably cut die.

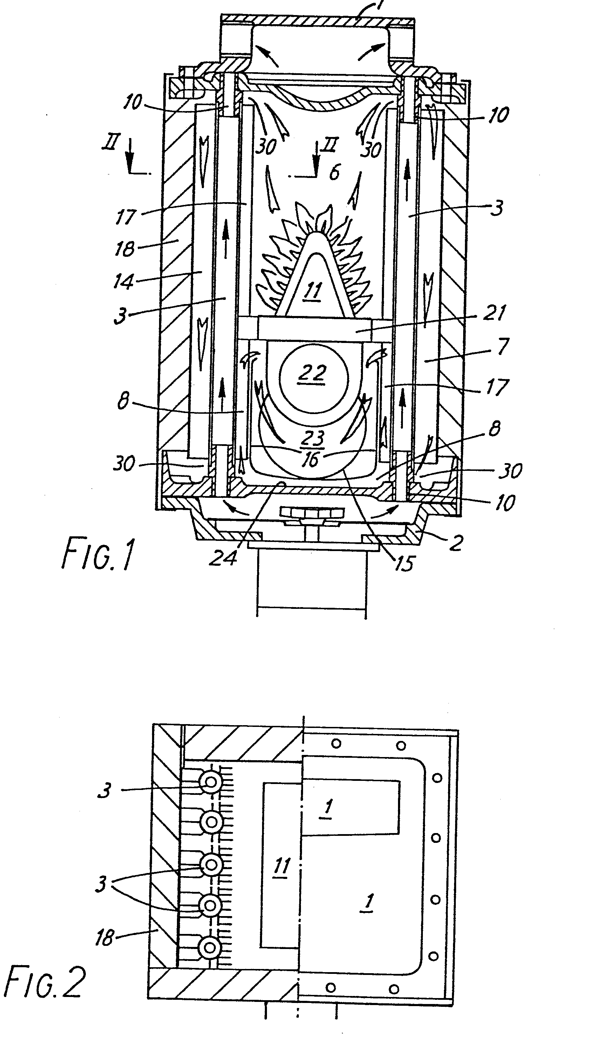

The tubes 3 are arranged in abutting relationship in rows, as is seen clearly in Figure 2, and one such row of tubes is arranged against each of two opposite inside surfaces of the walls of the casing 18. As explained in more detail later, a gap 30 is left between the top of the tubes and the lower wall of the flow manifold 1 and between the bottom of the tubes and the upper wall of the return manifold 2.

A platform 21 is situated in the central chamber and mounts a gas burner assembly 11 and gas input conduit 22. The platform 21 effectively splits the casing into two chambers: an upper, combustion chamber 6 and a lower, exhaust, chamber 23 from which a flue pipe 15 extends. Combustion products generated in the chamber 6 pass upwards through the chamber and past the inwardly-directed fins 17 on the rows of tubes 4 and thence through the gap 30 left at the top of the tubes into an "intermediate" zone 7 where the gases pass between the outwardly-directed fins 14 of the tubes 4. The products of combustion leave the zone 7 via the gaps 30 left beneath tubes 4 and into the chamber 23 where they are directed by baffles 16 between the fins 17 of the lower parts of the tubes 4, which form a condensing zone 8 and finally to the flue 15. Condensate which forms on the fins 17 within the condensing zone drops onto a tray 24 and is drained via a port 25.

In order to achieve an optimum balance between radiant heat absorption in the combustion chamber 6 and the intermediate transfer zone 7 and the condensing zone 8 the fins may conveniently be of differing surface area to thickness ratios, as shown in Figure 4. Such a longitudinally finned tube may be readily produced as an extruded metal section where the shape and dimensions of the section profile is determined by shapes cut into the die through which the metal is extruded. Aluminium alloys possess the qualities to satisfy both the requirements of high thermal conductivity and suitability for extrusion.

The extruded section is so arranged that the waterway is formed as a circular tube within the extruded section at the periphery of which longitudinally extending fins are arranged with a surface to cross sectional area ratio to suit the heat exchange requirements of that particular part of the flow path of combustion products. A boiler of such construction may take the form of a variety of configurations where the extruded heat exchanger tubes may be arranged on one or more sides of the burner assembly 11 or may completely surround the burner assembly. All such configurations possess in common a combustion chamber 6 located within the confines of the space enclosed by the axially finned heat exchanger tubes and the water collector manifolds 1 and 2. The upper and lower end of each tube 4 is connected to the adjacent manifold 1/2 by means of a ferrule 10 of steel or hard anodised aluminium. These ferrules are a press fit, preferably an interference fit, into the ends of the tubes and the walls of the manifolds respectively (which latter are suitably drilled for the purpose) so as to provide a mechanically stable and water-tight joint. The central part 24 of the ferrule is widened to define a pair of shoulders which act as abutment surfaces during assembly and ensure that a gap, corresponding to the length of the part 24 is left between the top and bottom of the tubes 4 and the adjacent manifold, as explained above.

The action of the baffle 16 is to effectively force the combustion gases, which are now at diminished temperature, up through the inner fins 17 of the extruded heat exchanger tube which are in contact with the coldest water, being adjacent to the return water flow. It is in this region that condensation of the water vapour within the products of combustion occurs, being brought about by the return water being at a slightly lower temperature than the dew point of the flue gases at that point. This function raises the overall thermal efficiency by several percentage points. The surface area of the fins 17 in the condensation zone may be increased, after extrusion of the finned tube, by welding or otherwise affixing further fins between those already present. This will improve the heat transfer in this area.

A boiler utilizing the features described above can be made very compact and lightweight for its thermal rating and the method of construction allows for ease of access for general service and maintenance. It could utilize burners or combustors of the forced convection type in common use.

The above described construction has a particular advantage in manufacture as the whole compact assembly can be pressed together in a single operation eliminating the need for screwed connectors or gaskets or welds.

Corrosion may be experienced when using aluminium tubes, particularly in the condensing zone 8, for this reason it might be advantageous to anodise the finned tubes on their exterior surfaces to minimise this problem.

CLAIMS

1.    A heating boiler comprising a casing, a water flow collector manifold, a return water collector manifold, a plurality of finned tubes extending within said casing and interconnecting the flow and return manifolds in a water-tight manner, and burner and exhaust assemblies positioned within said casing, the arrangement being such that a flow path for combustion products is defined within the casing from the burner assembly to the exhaust assembly which flow path is such that the combustion products come into intimate contact with said finned tubes.

2.    A heating boiler as claimed in claim 1 wherein the finned tubes are arranged parallel with one another and in a row or rows such that tubes in the or each row abut one another so as to effectively form a baffle operable to direct the flow of combustion products within the casing.

3.    A heating boiler as claimed in claim 2 wherein the row or rows of tubes are arranged adjacent the inside surface of the walls of the casing so as to define, on the one hand, a combustion chamber in which said burner assembly is situated and, on the other hand, an intermediate zone for the passage of combustion products between the row or rows of tubes and the adjacent inside surface.

4.    A heating boiler as claimed in claim 3 wherein the burner assembly is mounted on a platform at an intermediate position along said tubes within the casing in such a way as to define, above said platform, said combustion chamber and, below said platform, an exhaust chamber connected to a flue, and wherein means are provided for directing combustion products from said combustion chamber into said exhaust chamber via said intermediate zone.

5.    A heating boiler as claimed in claim 4 wherein, in said exhaust chamber, a baffle or baffles are provided to direct combustion products across the fins of said tubes.

6.    A heating boiler as claimed in claim 5 wherein means are provided for collecting and draining any condensate which forms on the exterior surfaces of the fins within the exhaust chamber.

7.    A heating boiler as claimed in any one of claims 3 to 6 wherein those fins on the tube which protrude inwardly into the casing are of different surface area to those extending outwardly towards the adjacent wall surface to thereby take advantage of the differing conditions which pertain in the two areas for maximum exchange of heat from the combustion products to the water within the tubes.

8.    A heating boiler as claimed in any one of the preceding claims wherein the fins on the tubes extend longitudinally of the tubes.

9.    A heating boiler as claimed in claim 8 wherein said tubes are formed of extruded aluminium alloy.

10.    A heating boiler as claimed in any one of the preceding claims wherein the ends of the tubes are connected in a liquid-tight manner to the adjacent manifold by means of respective cylindrically-shaped double-ended ferrules, each ferrule being, at one end, a push fit in an end of one of the tubes and, at the other end, a push fit into a hole formed in the adjacent manifold.

11.    A heating boiler as claimed in claim 10 wherein each ferrule has a central part of enlarged diameter defining a pair of shoulders which act as abutments during assembly of the boiler, to ensure that a gap is maintained between the ends of the tubes and the adjacent manifold surface, to allow the passage of combustion products.

FIG.1

FIG.2

0142214

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CH-A- 305 827 (AKTIENGESELLSCHAFT FÜR TECHNISCHE STUDIEN) * Page 2, left-hand column * | 1-3,8 | F 24 H 1/40 |
| A | EP-A-0 064 755 (SEEGER) * Claim 6 * | 6 | |
| A | EP-A-0 027 055 (STELRAD GROUP LTD) * Page 18, lines 9-11 * | 9 | |
| A | EP-A-0 067 798 (CANDIANO) * Page 2, lines 15-18; page 4, line 27 - page 5, line 4 * | 9,10 | |
| A | DE-A-2 036 012 (REYNOLDS) * Figure 4, reference 10 * | 10 | TECHNICAL FIELDS SEARCHED (Int. Cl. ³) |
| A | CH-A- 213 398 (GROLL) * Page 2, right-hand column, paragraphs 1-4; page 4, right-hand column, paragraph 2 * | 11 | F 24 H 1/00 F 28 F 1/00 |

The present search report has been drawn up for all claims

| Place of search BERLIN | Date of completion of the search 09-08-1984 | Examiner PIEPER C |
|---|---|---|